# EUROPEAN PATENT SPECIFICATION

(11) **EP 2 708 067 B1**
(45) Date of publication and mention of the grant of the patent: **21.08.2019**
(21) Application number: 12718621.1
(22) Date of filing: 19.04.2012
(51) Int. Cl.: H04L 29/12, H04W 80/04

(54) **DISTRIBUTED GATEWAY RELOCATION WITH CENTRAL INTERNET PROTOCOL ADDRESS ALLOCATION**
VERTEILTE GATEWAY-NEUPOSITIONIERUNG MIT ZENTRALER IP-ADRESSENZUTEILUNG
RELOCALISATION DE PASSERELLE DISTRIBUÉE AVEC ATTRIBUTION D'ADRESSE DE PROTOCOLE INTERNET CENTRALE

(30) Priority: 13.05.2011 WO PCT/EP2011/057735
(43) Date of publication of application: 19.03.2014
(73) Proprietor: Nokia Solutions and Networks Oy, 02610 Espoo (FI)
(72) Inventor: HAHN, Wolfgang, 16562 Bergfelde (DE)
(74) Representative: Nokia EPO representatives
(86) International application number: PCT/EP2012/057123
(87) International publication number: WO 2012/156171

(56) References cited:
- US-A1- 2008 259 873

## Description

### CROSS-REFERENCE TO RELATED APPLICATION:

This application is related to, claims the priority of international application PCT/EP2001/057735, filed May 13, 2011.

### BACKGROUND:

### Field:

A network architecture, such as that of an evolved packet core (EPC) network, can benefit from distribution of gateways. In particular, as data traffic grows, certain EPC networks may benefit from gateway relocation with central internet protocol (IP) address allocation.

### Description of the Related Art:

Distribution of gateways (GWs), such as serving gateways (SGWs) and packet data network gateways (PGW) as well as general packet radio service (GPRS) support node (GGSN) gateway can permit more direct/optimal routing, may decrease the traffic latency and saves transport cost. On the other hand, centralization of network management and control functions can help reduce operational cost and allow capital expenditure (CAPEX) saving, for example, by cloud computing. The benefit of centralization of particular control functions may increase as the number of gateways increases.

In third generation partnership project (3GPP) release 10 (Rel.10), selective IP traffic offload (SIPTO) allows to select GWs near the user equipment (UE) location. With UE movement, however, a locally chosen PGW may become non-optimal. There also may be other reasons for relocating UE/hosts to other GWs, such as energy saving.

In 3GPP, the SGW can be changed due to UE mobility, but the PGW is kept as fixed anchor. If PGW relocation is desired, in SIPTO a GW change can be achieved by forcing the UE to release the current packet data network (PDN) connection and establish a new one. For this new connection, then, an optimal PGW (and SGW) can be selected. Any change of a PGW, therefore, results in a change of the UE IP address, which is used to route packets to the new PGW.

This approach can lead to a considerable interruption time of IP connectivity due to the needed tear down of the old connectivity and setup of the new PDN connection before packets can be transferred. Moreover, the re-establishment of a PDN connection is a relatively complex procedure, as complex as the original connection establishment, and thus generates much signaling traffic for the control plane and particularly the MME. If the UE has only one PDN connection, this approach is a complete detach and attach procedure.

Conventionally, there is no provision of functionality of central assignment of IP addresses for distributed GWs that can be used to reduce the impact of the GW change to UE and MME. Indeed, conventional approaches first allocate a new GW/mobility anchor, and then a new IP address as this is the function/task of the new GW.

US 2008 / 259873 A1 describes an apparatus and method for providing gateway relocation to an external network wherein a user equipment includes an initial external network connection via a source core node, comprises initializing a mobility event, reallocating the initial external network connection from via the source core node to via a target core node to create a new external network connection, allocating the new IP address to the UE for the new external network connection, and using the new IP address.

### SUMMARY:

In a first aspect, the present invention provides a method as defined by independent claim 1. In a second aspect, the present invention provides a central controller as defined by independent claim 9.

### BRIEF DESCRIPTION OF THE DRAWINGS:

For proper understanding of the invention, reference should be made to the accompanying drawings, wherein:
Figure 1 illustrates an architecture according to certain embodiments.
Figure 2 illustrates a generalized signal flow according to certain embodiments.
Figure 3 illustrates a traffic path before a gateway change according to certain embodiments.
Figure 4 illustrates a traffic path after a gateway change according to certain embodiments.
Figure 5 illustrates a traffic path during an intermediate state according to certain embodiments.
Figure 6 illustrates allocation with a central controller waiting for the user equipment, according to certain embodiments.
Figure 7 illustrates allocation with a central controller forcing address renewal for the
   user equipment, according to certain embodiments.
Figure 8 illustrates IP Address assignment with IPv6 stateless address auto-configuration, according to certain embodiments.
Figure 9 illustrates a controller forcing the old address to be deprecated, according to certain embodiments.
Figure 10 illustrates a method according to certain embodiments.
Figure 11 illustrates another method according to certain examples not covered by the claims.
Figure 12 illustrates a system according to certain embodiments.

### DETAILED DESCRIPTION:

Certain embodiments can provide smooth gateway (GW) and internet protocol (IP) address change. For example, certain embodiments can first allocate a new IP address to hosts/UEs and second relocate to a new GW. Thus, in a smooth way, IP address change can be handled in the IP layer and not by heavy session and mobility management signaling utilizing the MME. Therefore, there can be little service interruption for UE in the case of GW change. Namely, there does not need to be a significant amount of time when the UE has no valid IP address.

In certain embodiments, a new IP address is allocated to the UE/host and then subsequently a GW relocation is performed.

Certain embodiments use the IP address (prefix) valid lifetime setting related to the IP address assignment of DHCP, including Stateful Address Configuration RFC 2131, RFC 3315 for DHCPv6, and of stateless IPv6 auto-configuration.

RFC 4862, IPv6 Stateless Address Autoconfiguration, describes the usage of the timer and RFC 4861, Neighbor Discovery in IPv6, describes the message formats. The use of a two timer schema, including preferred lifetime and valid lifetime, originally intended for host renumbering in a network can be similarly used here. A use case for the renumbering can be the change of the ISP for a particular network that would result in new address assignments. The schema can be as follows: a valid IP address can go from a valid state after expiration of a preferred lifetime to a deprecated state, where the use is not forbidden but a new address may get a higher priority. Later, after the valid lifetime expires, the old deprecated address disappears.

As the trigger for GW relocation is not limited to host mobility, the approach described herein can be applied to fixed networks as well as mobile networks.

Certain embodiments can be applied to various architectures. A centralized controller element combined with a group of distributed GW elements can be seen as one logical entity from a MME, so the GW change can be performed below the MME control. In a particular embodiment, the two control functions of MME and central controller can be combined, but this is not required.

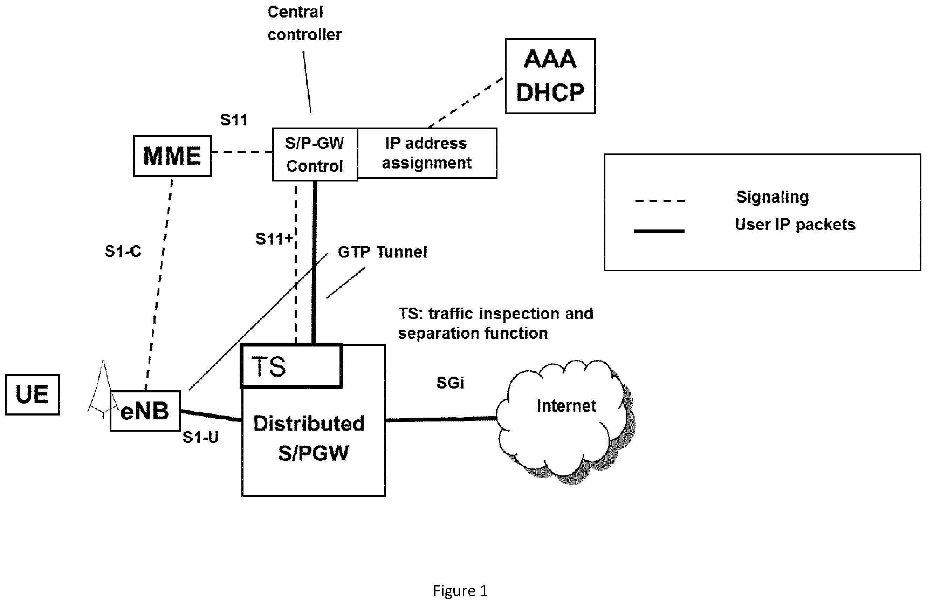

Figure 1 illustrates an architecture according to certain embodiments. In Figure 1, an architecture of a central controller with IP address assignment functionality for distributed GWs is shown.

The central controller can be responsible for IP address assignment for all distributed GWs. For this, the traffic inspection and separation function in the distributed GW can relay the corresponding "IP layer control messages" between the UE and the central controller.

This functionality can be used in the process of GW relocation. The central controller can decide on the GW relocation, it can select a new GW, assign a new IP address for the UE, and pre-establish the context in the new GW and the needed UP tunnels. It is a make before break schema for minimized data path interruption.

The IP Address change in the UEs/hosts can be based on "natural" IP layer functions. There is no need to perform heavy mobile specific UE NAS session and mobility management signaling. The different schemas for IP address signaling can depend on the applied method.

For DHCP with dynamic IP address assignment, which can be referred to as "stateful address/prefix assignment," the central controller rejects UE refreshing requests for the old IP addresses. The UE may need to renew the IP Address after the lease time expires, thus refreshing requests for the old IP addresses can force the UE to change IP addresses. The lease time may be selected according to operator policy and/or other criteria like user history, for example recognized mobility, to have trigger points to check for GW relocation. There can also be an option for forced renewal of the address triggered by the DHCP server.

For IPv6 "stateless address configuration" the central controller can advertise the new IP address using, for example, a router advertisement (RA), and at the same time may reduce the lifetime of the old address and force it to go to deprecated state.

Alternatively, the central controller may use other methods to make assigned IP addresses invalid.

In certain examples useful for understanding the invention, but not covered by the claims, there is a hard switch between the old and new IP address and old and new GW, this method can be implemented using, for example, DHCP based address allocation. In the present invention, there is an intermediate phase where the old and new IP Addresses can be used in parallel and the old and new GW can be used in parallel as well. This method can be implemented using IPv6 stateless address auto-configuration. DHCP can permit, in addition to IP Address assignment, to configure also other network parameters and policies in the hosts and also can allow for more convergence with fixed and mobile network hosts. Examples include the transfer of policies to the hosts to behave correctly in case of the presence of multiple, for example physical, interfaces like different radio access technologies.

The old distributed GW may support the triggering of the path switch by checking when the UE takes a new IP address into use, such as by checking the change of UE UL packets source address. When the UE is using the new address, the GW can inform the central controller and trigger, in this way, the GW change procedure, namely the GW switch or handover.

The central controller can switch the traffic path after information received form the old GW or after a timer expires. It releases old resources in the old GW. A procedure/message can update the BS about the changed core network path / new GW, including an UL tunnel parameter.

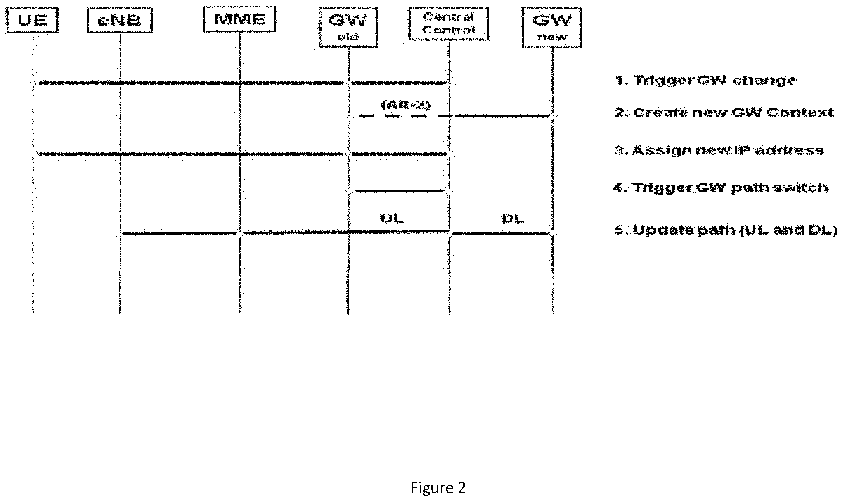

Figure 2 illustrates a generalized signal flow according to certain embodiments. More particularly, Figure 2 show a generalized procedure for the GW relocation and the involved nodes for each step.

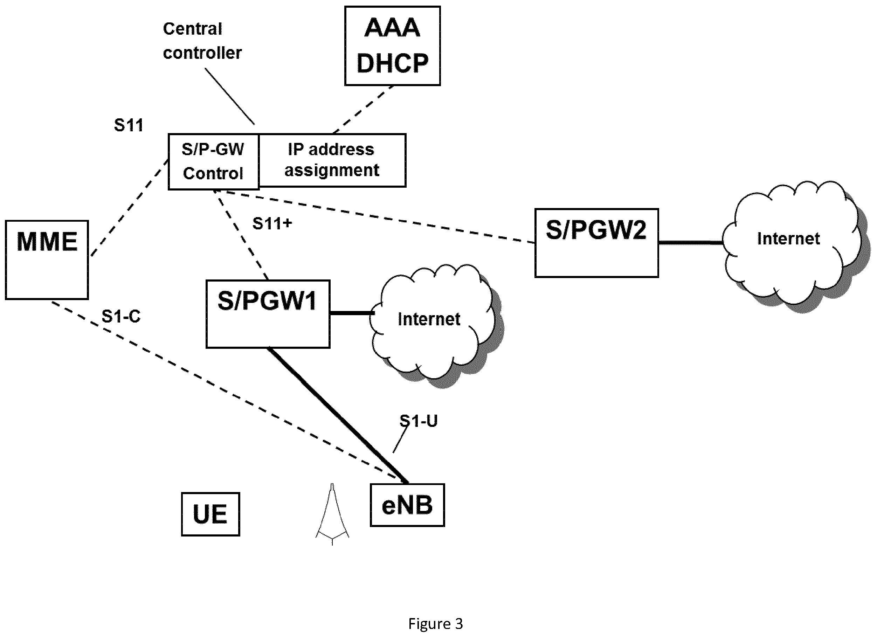

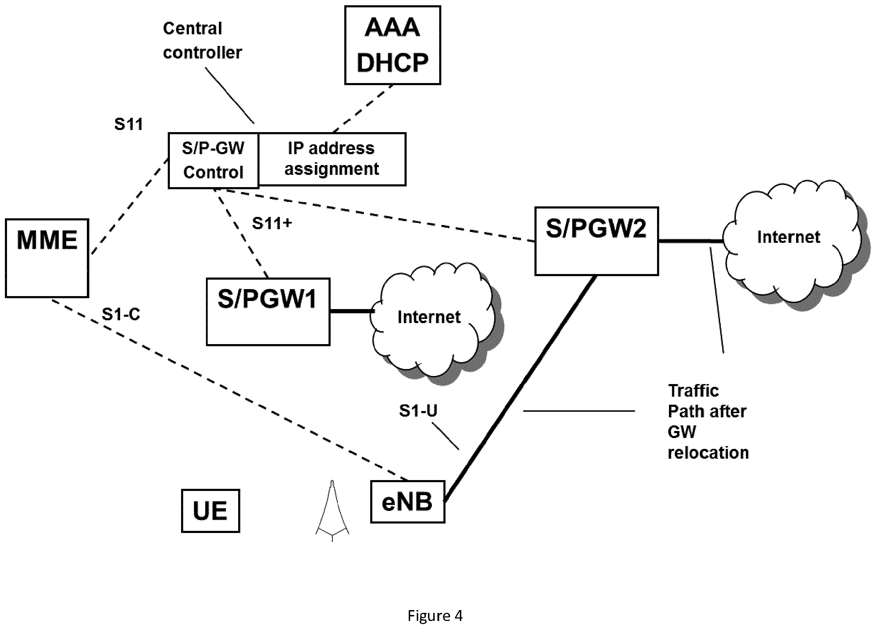

Figure 3 illustrates a traffic path before a gateway change according to certain embodiments. By contrast, Figure 4 illustrates a traffic path after a gateway change according to certain embodiments. In these pictures, the GTP tunnel to exchange IP layer control messages between distributed GWs and central controller is not depicted as UP tunnel but seen as part of S11+ control interface information.

In the present invention, as mentioned above, there is an intermediate state connecting the new and old distributed GW. In this case, the old GW can combine the downlink traffic with old and new UE destination address and can forward it to the S1-U interface/UE. This allows the UE/host to use deprecated and preferred new address in parallel for a smooth change of the IP addresses and a graceful degradation of the usage of the old address over a particular period in time. The duration of this intermediate state can be controlled by the central controller by setting the timers appropriately.

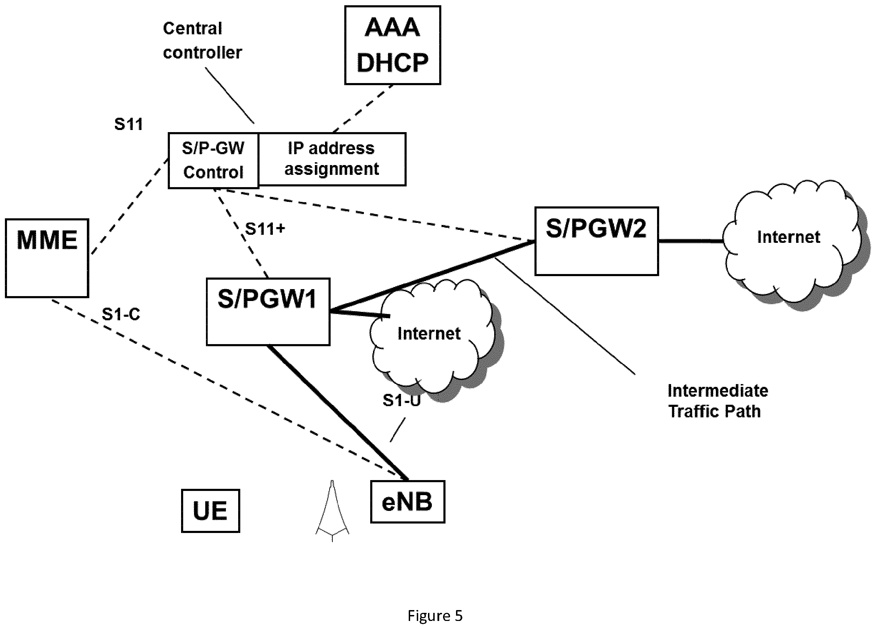

Figure 5 illustrates a traffic path during an intermediate state according to certain embodiments. More particularly, Figure 5 shows how the UE can receive downlink packets with the old IP address in old GW1 and the new IP Address, in new GW2 routed over the old GW1, assuming all traffic is coming from the Internet.

Details regarding the UP tunnels are described for GTP in certain illustrated embodiments. However, other tunnel mechanisms and protocols, such as PMIP, are possible as well.

Since the change of the IP address is done "in tunnel" by IP layer mechanisms, this may imply that the UE is in active mode. In current smartphones, applications may be running that make use of the "always on" capability for, for example, periodically sending status messages. To avoid heavy signaling due to active idle state changes, the active timers can be set to higher values. Or in case the UE is in idle mode, the "IP layer packets" can trigger an idle active state change, as any other user data packet transfer.

Before the GW relocation procedure shown in Figure 2 is carried out for a UE, the central controller can select candidates for a GW change. If the decision is caused by mobility, then to ensure optimal routing the central controller can have location information about the UE. This information can be delivered by the IP address of the eNB from the modify bearer request messages at the S11 interface during the service request procedure or handover/path switch procedure. Another option is to activate the location change reporting procedure for certain UEs that indicate the cell of the UE in the S11 message change notification. Other criteria to move UEs to other GWs might be load balancing or energy saving, such as to switch off some GW nodes.

A GW relocation procedure can begin with triggering a GW change. For candidate UEs for a GW relocation, a trigger to start the procedure can take into account the opportunity to run IP layer procedures to assign a new IP address. When assigned IP addresses are not immediately removed from hosts, the central controller can keep track of the UE IP address valid timer and/or can wait for a DHCP Request. Alternatively, it can start, based on internal conditions and status information, to run a forced renewal of the IP Address or send routing advertisements.

One aspect of the present invention is to create a new GW context. Before allocating a new UE IP address, the central controller can select a new distributed GW for the UE. The procedures may be based on session management procedures of 3GPP technical specification (TS) 23.401, such as Create session, Modify bearer, and the like. Differences in parameter settings or new parameters are described below.

In one alternative useful for understanding the present invention, but not covered by the claims, the central controller can trigger the context establishment in the selected distributed GW on the S11+ interface by sending S11 "create session" messages to the new GW and it can provide the downlink tunnel endpoint parameters of the eNB (S1). The distributed GW can provide its UL GTP parameters for the S1 tunnel back to the central controller. Together with this context establishment in the new distributed GW, the traffic separation function in the new distributed GW can also be activated and the tunnel between distributed GW and central controller for IP Address handling can be set up.

Parameters can be used in connection with a create session request. The PDN Address Allocation (PAA) parameter can contain the new IP address selected by the central controller, as in a static IP allocation schema when subscribed in the home subscriber server (HSS).

In the present invention, an intermediate path from the new GW to the old GW to the eNB can be used. The new GW context can be established with a create session message sent to the old GW, where the old GW can be addressed like a SGW. The create session message can include a new linkage parameter that informs the old GW that the traffic from the new tunnel of the new GW is to be combined with the existing traffic of the same UE in the S1 tunnel. This can permit the old GW to forward DL data from the new GW to the existing tunnel of the UE from the old GW to the eNB. With the traffic inspection and separation function, the old GW can learn if the UE has allocated a new IP address, and can forward the UL IP packets, with the new IP source address, via the tunnel to the new GW.

The present invention also relates to assignment of a new IP address. In the figures, the terms client and server are used for the IP layer protocols DHCP and Neighbor discovery protocol. In this context, the client is a function of the host/UE and the server a function of the central controller.

The central controller can provide the functionality of the first hop router in the network. After the selection of the new distributed GW the central controller assigns the new UE IP Address, for example an IPv6 Prefix, from the prefix/address ranges of the selected GW. For this purpose, the central controller can use internal data bases and/or functions typically provided by AAA and DHCP servers, as shown in Figure 1.

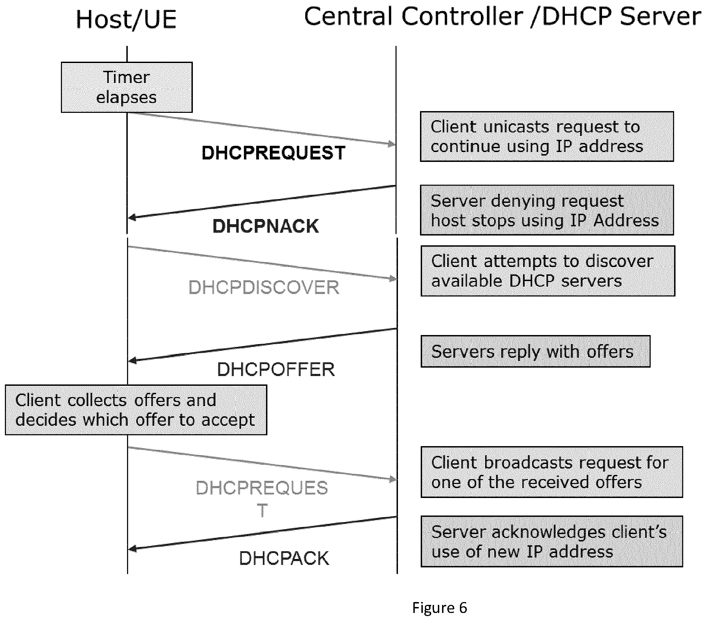

The signaling of different protocol options are described in the following. Figure 6 illustrates allocation with a central controller waiting for the user equipment, according to certain embodiments. Figure 6 illustrates Stateful DHCPv4/v6 based address allocation with a central controller waiting for UE to renew the IP address due to lease timer.

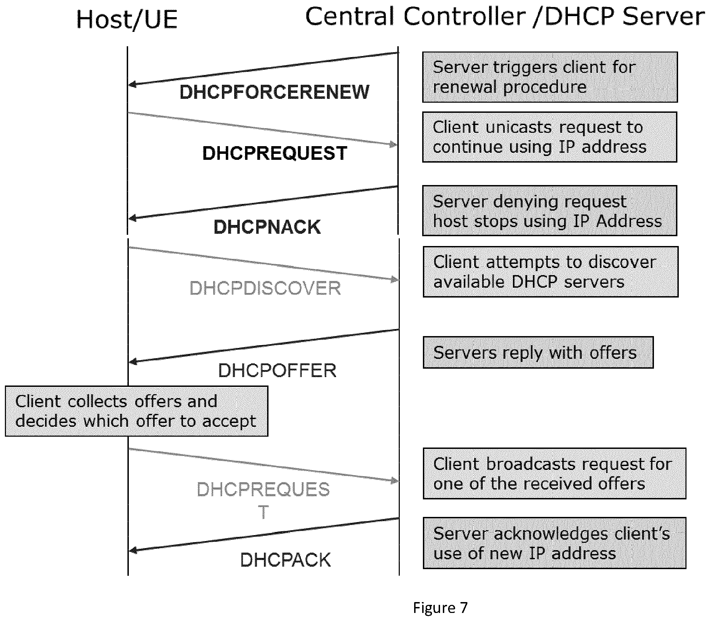

Figure 7 illustrates allocation with a central controller forcing address renewal for the user equipment, according to certain embodiments. More specifically, Figure 7 illustrates an example of DHCP based address allocation with a central controller forcing address renewal with DHCP option according to RFC 3203.

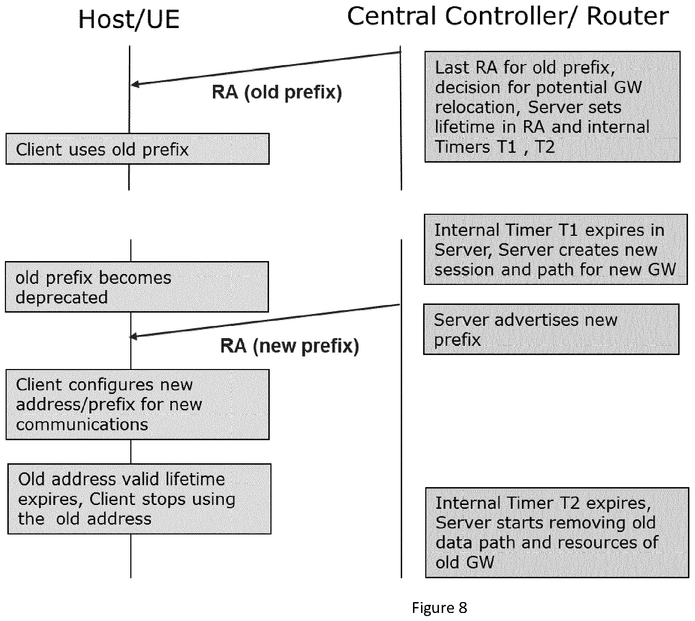

Figure 8 illustrates IP Address assignment with IPv6 stateless address auto-configuration, according to certain embodiments. This schema can make use of the timers in the Prefix Information option of the Router Advertisement option that was developed for site renumbering. It allows time out of an address and, in this way, it can provide for a graceful degradation of the functions/applications using the "old" address. This is the case when an address becomes "deprecated" and the use is discouraged but not forbidden. This way the higher layers get an indication to change to a new "preferred" address when starting a new communication or leave the source address selection to the IP layer.

The timer values can be set by operators in the central controller. The central controller could also keep track of the life time values assigned for different prefixes (which would make the IP address assignment technically no longer stateless).

The central controller can store the lifetime values of the RA and can set own timers for synchronized handling with the host/UE. The flow description can also include information of other steps of the procedure according to Figure 2.

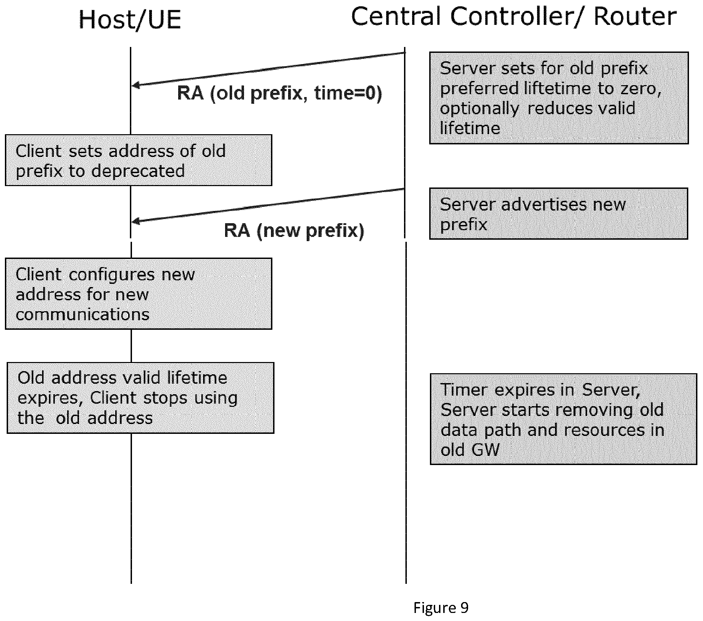

Figure 9 illustrates a controller forcing the old address to be deprecated, according to certain embodiments. In this option, the controller can force that the old address becomes deprecated by sending an RA message with the preferred lifetime set to zero or a short value. The valid lifetime may be reduced as well.

Certain embodiments can relate to triggering a gateway path switch. The old GW can monitor the UE behavior and check if the UE has taken the new IP address into use, and additionally if for some time the old address has not been used. It can then send a notification to the central controller.

The central controller can take this GW information into account or simply wait for the expiration of an internal timer or both and start the path update procedure. The internal timer can correspond to timer T2 in the flows above.

Certain embodiments an also relate to path update. For the uplink path, the central controller can trigger the MME to run the below described S1 uplink UP tunnel update procedure. Specifically, the S1 uplink UP tunnel update procedure can be implemented with new messages or new parameters. For example, the central controller can send, on the S11 interface, a new "Session modification" message containing the "SGW" IP address and TEID for uplink traffic of the new distributed GW. This message can be sent similar to the way that a "Create session response" message is sent from SGW to MME. The MME can store the new tunnel endpoint parameters in the context data of the corresponding PDN connection.

The MME can then send, on S1, a "Bearer Modify request" message that contains new S1-UP UL parameters, or the MME can send a new "Uplink Path switch" message. Then, the messages can be acknowledged back to the central controller. In this way, the eNB can be updated to change the GW address from the old to the new distributed GW.

For updating the DL path, a technique like that illustrated in Figures 5 and 8 can be used to remove the intermediate path from new GW to old GW and establish the tunnel between new GW and eNB.

For this path update the central controller can use the Modify Bearer request procedure containing the address and tunnel parameters of the eNB. This update can be similar to the way that the MME informs the SGW about a HO/path switch or a new SGW informs the PGW of a SGW change.

Finally, after the UE is completely handled by the new GW, the central controller can release the resources in the old GW using a Delete Session Request procedure.

Certain embodiments permit implementation of a new mobility schema to cope with an increased number of GW relocations without adding additional load to the MME compared to a SIPTO like GW relocation procedures. (The higher number of GW relocations may result from a higher number of GWs and its higher topological distribution in the network.)

Moreover, certain embodiments allow for a more smooth GW change, since the host/UE can adopt the new IP address over a period of time. In addition to mobility related handing over UEs from one GW to another, certain embodiments are well suited for network management triggered GW changes. For example, in case of an overload situation at some Internet exchange point that is served by a GW or in case of switching off GWs for energy saving, certain embodiments can be utilized.

Additionally, certain embodiments can be implemented quite independently from the rest of the network, and may need only a small update in the MME to support the UL path switch procedure.

Furthermore, session management procedures between the central controller and the distributed GW can operate in harmony, to large extent, with existing session management procedures implemented in SGW and PGW today. Finally, certain embodiments permit further centralization of control functions that might primarily be introduced to simplify the network management while offering additional possibilities for mobility handling.

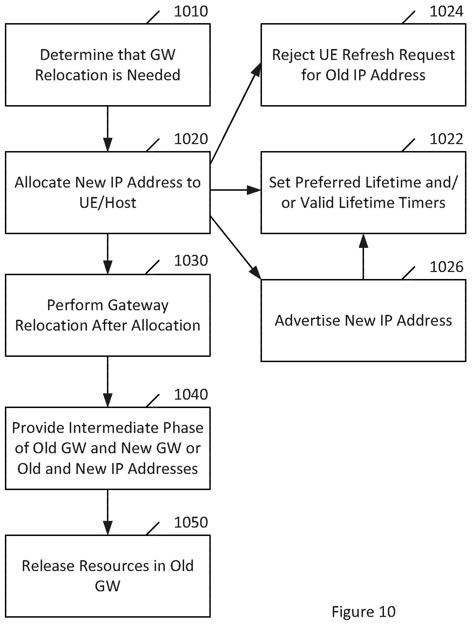

Figure 10 illustrates a method according to certain embodiments. The method of Figure 10 may be performed by, for example, a central controller of a group of distributed gateways.

As shown in Figure 10, a method includes, at 1010, determining that a gateway relocation is to be performed by, for example, a central controller. The method also includes, at 1020, allocating a new internet protocol address to a user equipment or host. The method further includes, at 1030, performing a gateway relocation after allocating the new internet protocol address.

At 1022, the method can include setting at least one timer for an old internet protocol address of the user equipment. For example, the method can include setting a timer for a preferred lifetime for the old internet protocol address of the user equipment or a timer for a valid lifetime for the old internet protocol address of the user equipment.

The allocating the new internet protocol address comprises stateful address/prefix assignment. For example, at 1024, the method can include rejecting a user equipment refresh request for an old internet protocol address of the user equipment.

Alternatively, the allocating the new internet protocol address can include stateless address configuration. For example, at 1026, the method can include advertising the new internet protocol address and, at 1022, reducing a lifetime of an old internet protocol address.

In an example not covered by the claims, the allocating the new internet protocol address comprises a hard switch from an old internet protocol address to the new internet protocol address. Moreover, the performing the gateway relocation comprises a hard switch from an old gateway to a new gateway.

In the present invention, at 1040, the method includes providing an intermediate phase where both an old internet protocol address and the new internet protocol address can be used, and where both an old gateway and a new gateway can be used.

The performing the gateway relocation can include switching a traffic path upon receiving information from an old gateway or upon expiry of a timer. Additionally, at 1050, the method includes releasing resources in an old gateway after performing the gateway relocation to a new gateway.

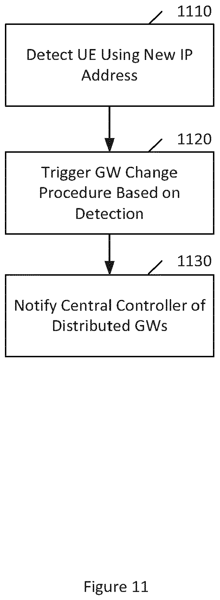

Figure 11 illustrates another method according to certain examples not covered by the claims. The method of Figure 11 may be performed by, for example, a distributed gateway. As shown in Figure 11, the method can include, at 1110, detecting that a user equipment has begun to use a new internet protocol address. The method can also include, at 1120, triggering a gateway change procedure upon detection of the new internet protocol address. Moreover, at 1130, the triggering can include notifying a central controller.

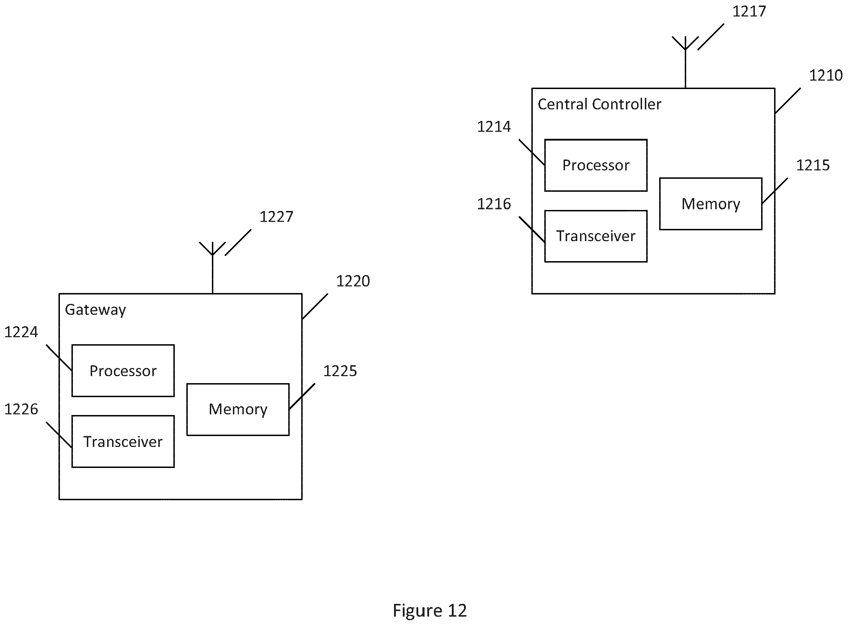

Figure 12 illustrates a system according to certain embodiments. In an example embodiment, a system may include numerous devices, including at least one central controller 1210 and more than one gateway 1220. Each of the devices 1210 and 1220 may be equipped with at least one processor (respectively 1214 and 1224), at least one memory (respectively 1215 and 1225) (including computer program instructions or code), a transceiver (respectively 1216 and 1226), and an antenna (respectively 1217 and 1227). There is no requirement that each of these devices be so equipped. For example, the central controller 1210 and the gateway 1220 may be equipped for wired communication only.

The transceiver (respectively 1216 and 1226) can be a transmitter, a receiver, both a transmitter and a receiver, or a unit that is configured both for transmission and reception. The transceiver (respectively 1216 and 1226) can be coupled to corresponding one or more antenna(s) (respectively 1217 and 1227). Other communications hardware, such as a network interface card can also be included.

The at least one processor (respectively 1214 and 1224) can be variously embodied by any computational or data processing device, such as a central processing unit (CPU) or application specific integrated circuit (ASIC). The at least one processor (respectively 1214 and 1224) can be implemented as one or a plurality of controllers.

The at least one memory (respectively 1215 and 1225) can be any suitable storage device, such as a non-transitory computer-readable medium. For example, a hard disk drive (HDD) or random access memory (RAM) can be used in the at least one memory (respectively 1215 and 1225). The at least one memory (respectively 1215 and 1225) can be on a same chip as the corresponding at least one processor (respectively 1214 and 1224), or may be separate from the corresponding at least one processor (respectively 1214 and 1224).

The computer program instructions may be any suitable form of computer program code. For example, the computer program instructions may be a compiled or interpreted computer program.

The at least one memory (respectively 1215 and 1225) and computer program instructions can be configured to, with the at least one processor (respectively 1214 and 1224), cause a hardware apparatus (for example, central controller 1210 or gateway 1220) to perform a process, such as any of the processes described herein (see, for example, Figures 2 and 6-11).

Thus, in certain embodiments, a non-transitory computer-readable medium can be encoded with computer instructions that, when executed in hardware perform a process, such as one of the processes described herein. Alternatively, certain embodiments of the present invention may be performed entirely in hardware.

The devices of the system may also include additional components. For example, each of central controller 1210 and gateway 1220 can include a user interface that is operable connected to the processor (respectively 1214 and 1224) and memory (respectively 1215 and 1225). That user interface can include a display, such as a liquid crystal display (LCD) or organic electroluminescent display (OELD), as well as speakers or audio outputs. Tactile outputs, such as a haptic feedback system, can also be included. The user interface may have a touch screen to receive user input. User input can also be provided by a keypad, keyboard, microphone, joystick, mouse, trackball, or other input device. Of course, there is no requirement that the devices include a user interface. For example, the central controller 1210 and the gateway 1220 may be embodied in part as a rack-mounted computer.

Although Figure 12 illustrates a system including a central controller and a gateway, certain embodiments may be applicable to other embodiments. For example, certain embodiments may be applicable to systems in which there are numerous gateways distributed over a geographic area.

One having ordinary skill in the art will readily understand that the invention as discussed above may be practiced with steps in a different order, and/or with hardware elements in configurations which are different than those which are disclosed.

In order to determine the metes and bounds of the invention, therefore, reference should be made to the appended claims.

### Glossary of Abbreviations

- AAA: Authentication Authorization and Accounting
- APN: Access Point Name
- BS: Base Station
- DHCP: Dynamic Host Configuration Protocol
- eNB: BS in case of LTE
- EPC: Evolved Packet Core (in the EPS)
- EPS: Evolved Packet system, LTE RAN and EPC
- GTP: GPRS tunneling Protocol
- GW: Gateway, S/P-GW
- NAS: Non Access Stratum: signaling between MME and UE
- SGW: Serving GW
- PGW: PDN GW
- LTE: Long Term Evolution
- MME: Mobility Management Entity
- PDN: Packet Data Network
- RA: Router Advertisement message
- SIPTO: Selective IP Traffic Offload
- TEID: Tunneling endpoint Identifier
- UE: User Equipment, mobile device
- UL, DL: uplink, downlink

## Claims

1. A method for performing a gateway relocation comprising:
determining (1010) that a gateway relocation is to be performed;
allocating (1020) a new internet protocol address to a user equipment (UE) or host using an old internet protocol address;
performing (1030) a gateway relocation after allocating the new internet protocol address;
providing (1040) an intermediate phase;
wherein in the intermediate phase both the old internet protocol address and the new internet protocol address can be used in parallel and the old gateway (S/PGW1; 1220) and the new gateway (S/PGW2; 1220) can be used in parallel; and
releasing (1050) resources in the old gateway.

2. The method of claim 1, further comprising: setting (1022) at least one timer for an old internet protocol address of the user equipment (UE).

3. The method of claim 2, further comprising:
setting a timer for a preferred lifetime for the old internet protocol address of the user equipment (UE).

4. The method of claim 2, further comprising:
setting a timer for a valid lifetime for the old internet protocol address of the user equipment (UE).

5. The method of claim 1, wherein the allocating the new internet protocol address comprises stateful address/prefix assignment.

6. The method of claim 5, further comprising:
rejecting (1024) a user equipment (UE) refresh request for an old internet protocol address of the user equipment (UE).

7. The method of claim 1, wherein the allocating the new internet protocol address comprises stateless address configuration.

8. The method of claim 7, further comprising:
advertising (1026) the new internet protocol address; and
reducing a lifetime of an old internet protocol address.

9. A central controller (1210) comprising:
at least one processor (1214); and
at least one memory (1215) including computer program code,
wherein the at least one memory (1215) and the computer program code are configured to, with the at least one processor (1214), cause the central controller at least to determine (1010) that a gateway relocation is to be performed;
create a new gateway context;
trigger a context establishment in an old gateway;
allocate (1020) a new internet protocol address to a user equipment (UE) or host using an old internet protocol address;
perform (1030) a gateway relocation after allocating the new internet protocol address;
provide (1040) an intermediate phase;
wherein in the intermediate phase both the old internet protocol address and the new internet protocol address can be used in parallel and the old gateway (S/PGW1, 1220) and the new gateway (S/PGW2, 1220) can be used in parallel;
wherein the central controller (1210) exchanges internet protocol layer control messages between the gateways to be changed; and
releasing release (1050) resources in the old gateway.

10. The central controller (1210) of claim 9, wherein the at least one memory (1215) and the computer program code are also configured to, with the at least one processor (1214), cause the central controller at least to set at least one timer for an old internet protocol address of the user equipment (UE).

11. The central controller (1210) of claim 10, wherein the at least one memory (1215) and the computer program code are also configured to, with the at least one processor (1214), cause the central controller at least to set a timer for a preferred lifetime for the old internet protocol address of the user equipment (UE).

12. The central controller (1210) of claim 10, wherein the at least one memory (1215) and the computer program code are also configured to, with the at least one processor (1214), cause the central controller at least to set a timer for a valid lifetime for the old internet protocol address of the user equipment.

13. The central controller (1210) of claim 9, wherein the at least one memory (1215) and the computer program code are also configured to, with the at least one processor (1214), cause the central controller at least to allocate the new internet protocol address using stateful address/prefix assignment.

14. The central controller (1210) of claim 13, wherein the at least one memory (1215) and the computer program code are also configured to, with the at least one processor (1214), cause the central controller at least to reject a user equipment refresh request for an old internet protocol address of the user equipment (UE).

15. The central controller (1210) of claim 9, wherein the at least one memory (1215) and the computer program code are also configured to, with the at least one processor (1214), cause the central controller at least to allocate the new internet protocol address using stateless address configuration.

## Patentansprüche

1. Verfahren zum Durchführen einer Gatewayneupositionierung, das Folgendes umfasst:
Bestimmen (1010), dass eine Gatewayneupositionierung durchzuführen ist;
Zuteilen (1020) einer neuen Internetprotokolladresse für eine Teilnehmereinrichtung (UE) oder einen Host, die eine alte Internetprotokolladresse verwenden;
Durchführen (1030) einer Gatewayneupositionierung nach dem Zuteilen einer neuen Internetprotokolladresse;
Bereitstellen (1040) einer Zwischenphase;
wobei in der Zwischenphase sowohl die alte Internetprotokolladresse als auch die neue Internetprotokolladresse parallel verwendet werden können und das alte Gateway (S/PGW1; 1220) und das neue Gateway (S/PGW2; 1220) parallel verwendet werden können; und
Freigeben (1050) von Ressourcen im alten Gateway.

2. Verfahren nach Anspruch 1, das ferner Folgendes umfasst:
Einstellen (1022) mindestens eines Timers für eine alte Internetprotokolladresse der Teilnehmereinrichtung (UE) .

3. Verfahren nach Anspruch 2, das ferner Folgendes umfasst:
Einstellen eines Timers für eine bevorzugte Lebensdauer der alten Internetprotokolladresse der Teilnehmereinrichtung (UE).

4. Verfahren nach Anspruch 2, das ferner Folgendes umfasst:
Einstellen eines Timers für eine gültige Lebensdauer der alten Internetprotokolladresse der Teilnehmereinrichtung (UE).

5. Verfahren nach Anspruch 1, wobei das Zuteilen der neuen Internetprotokolladresse eine zustandsbehaftete Adress-/Präfixzuweisung umfasst.

6. Verfahren nach Anspruch 5, das ferner Folgendes umfasst:
Zurückweisen (1024) einer Teilnehmereinrichtungs(UE)-Aktualisierungsanforderung für eine alte Internetprotokolladresse der Teilnehmereinrichtung (UE) .

7. Verfahren nach Anspruch 1, wobei das Zuteilen der neuen Internetprotokolladresse eine zustandslose Adressauslegung umfasst.

8. Verfahren nach Anspruch 7, das ferner Folgendes umfasst:
Bekanntgeben (1026) der neuen Internetprotokolladresse und
Reduzieren einer Lebensdauer einer alten Internetprotokolladresse.

9. Zentrale Steuerung (1210), die Folgendes umfasst:
mindestens einen Prozessor (1214) und
mindestens einen Speicher (1215), der einen Computerprogrammcode beinhaltet,
wobei der mindestens eine Speicher (1215) und der Computerprogrammcode dazu ausgelegt sind, die zentrale Steuerung mit dem mindestens einen Prozessor (1214) mindestens zu Folgendem zu veranlassen
Bestimmen (1010), dass eine Gatewayneupositionierung durchzuführen ist;
Erstellen eines neuen Gatewaykontextes;
Auslösen einer Kontextherstellung in einem alten Gateway;
Zuteilen (1020) einer neuen Internetprotokolladresse für eine Teilnehmereinrichtung (UE) oder einen Host, die eine alte Internetprotokolladresse verwenden;
Durchführen (1030) einer Gatewayneupositionierung nach dem Zuteilen einer neuen Internetprotokolladresse;
Bereitstellen (1040) einer Zwischenphase;
wobei in der Zwischenphase sowohl die alte Internetprotokolladresse als auch die neue Internetprotokolladresse parallel verwendet werden können und das alte Gateway (S/PGW1, 1220) und das neue Gateway (S/PGW2, 1220) parallel verwendet werden können;
wobei die zentrale Steuerung (1210) Internetprotokollschichtsteuernachrichten zwischen den zu ändernden Gateways austauscht; und
Freigabe Freigeben (1050) von Ressourcen im alten Gateway.

10. Zentrale Steuerung (1210) nach Anspruch 9, wobei der mindestens eine Speicher (1215) und der Computerprogrammcode auch dazu ausgelegt sind, die zentrale Steuerung mit dem mindestens einen Prozessor (1214) mindestens zu veranlassen, mindestens einen Timer für eine alte Internetprotokolladresse der Teilnehmereinrichtung (UE) einzustellen.

11. Zentrale Steuerung (1210) nach Anspruch 10, wobei der mindestens eine Speicher (1215) und der Computerprogrammcode auch dazu ausgelegt sind, die zentrale Steuerung mit dem mindestens einen Prozessor (1214) mindestens zu veranlassen, einen Timer für eine bevorzugte Lebensdauer für die alte Internetprotokolladresse der Teilnehmereinrichtung (UE) einzustellen.

12. Zentrale Steuerung (1210) nach Anspruch 10, wobei der mindestens eine Speicher (1215) und der Computerprogrammcode auch dazu ausgelegt sind, die zentrale Steuerung mit dem mindestens einen Prozessor (1214) mindestens zu veranlassen, einen Timer für eine gültige Lebensdauer für die alte Internetprotokolladresse der Teilnehmereinrichtung einzustellen.

13. Zentrale Steuerung (1210) nach Anspruch 9, wobei der mindestens eine Speicher (1215) und der Computerprogrammcode auch dazu ausgelegt sind, die zentrale Steuerung mit dem mindestens einen Prozessor (1214) mindestens zu veranlassen, die neue Internetprotokolladresse unter Verwendung einer zustandsbehafteten Adress-/Präfixzuweisung zuzuteilen.

14. Zentrale Steuerung (1210) nach Anspruch 13, wobei der mindestens eine Speicher (1215) und der Computerprogrammcode auch dazu ausgelegt sind, die zentrale Steuerung mit dem mindestens einen Prozessor (1214) mindestens zu veranlassen, eine Teilnehmereinrichtungsaktualisierungsanforderung für eine alte Internetprotokolladresse der Teilnehmereinrichtung (UE) zurückzuweisen.

15. Zentrale Steuerung (1210) nach Anspruch 9, wobei der mindestens eine Speicher (1215) und der Computerprogrammcode auch dazu ausgelegt sind, die zentrale Steuerung mit dem mindestens einen Prozessor (1214) mindestens zu veranlassen, die neue Internetprotokolladresse unter Verwendung einer zustandslosen Adressauslegung zuzuteilen.

## Revendications

1. Procédé destiné à effectuer une relocalisation de passerelle, comprenant :
la détermination (1010) du fait qu'une relocalisation de passerelle doit être effectuée ;
l'attribution (1020) d'une nouvelle adresse de protocole Internet à un équipement d'utilisateur (UE) ou à un hôte en utilisant une ancienne adresse de protocole Internet ;
la réalisation (1030) d'une relocalisation de passerelle après avoir attribué la nouvelle adresse de protocole Internet ;
la mise en place (1040) d'une phase intermédiaire ;
**caractérisé en ce que**, lors de la phase intermédiaire, l'ancienne adresse de protocole Internet et la nouvelle adresse de protocole Internet peuvent toutes deux être utilisées en parallèle et l'ancienne passerelle (S/PGW1 ; 1220) et la nouvelle passerelle (S/PGW2 ; 1220) peuvent être utilisées en parallèle ; et
la libération (1050) de ressources dans l'ancienne passerelle.

2. Procédé selon la revendication 1, comprenant en outre :
le réglage (1022) d'au moins un temporisateur pour une ancienne adresse de protocole Internet de l'équipement d'utilisateur (UE).

3. Procédé selon la revendication 2, comprenant en outre :
le réglage d'un temporisateur pour une durée de vie préférée de l'ancienne adresse de protocole Internet de l'équipement d'utilisateur (UE).

4. Procédé selon la revendication 2, comprenant en outre :
le réglage d'un temporisateur pour une durée de vie valide de l'ancienne adresse de protocole Internet de l'équipement d'utilisateur (UE).

5. Procédé selon la revendication 1, l'attribution de la nouvelle adresse de protocole Internet comprenant une affectation d'adresse/de préfixe avec état.

6. Procédé selon la revendication 5, comprenant en outre :
le rejet (1024) d'une demande de rafraîchissement d'équipement d'utilisateur (UE) pour une ancienne adresse de protocole Internet de l'équipement d'utilisateur (UE).

7. Procédé selon la revendication 1, l'attribution de la nouvelle adresse de protocole Internet comprenant une configuration d'adresse sans état.

8. Procédé selon la revendication 7, comprenant en outre :
l'annonce (1026) de la nouvelle adresse de protocole Internet ; et
la réduction de la durée de vie d'une ancienne adresse de protocole Internet.

9. Moyen (1210) de commande central comprenant :
au moins un processeur (1214) ; et
au moins une mémoire (1215) incluant du code de programme informatique,
la ou les mémoires (1215) et le code de programme informatique étant configurés pour amener, avec le ou les processeurs (1214), le moyen de commande central au moins à
déterminer (1010) qu'une relocalisation de passerelle doit être effectuée ;
créer un contexte de nouvelle passerelle ;
déclencher un établissement de contexte dans une ancienne passerelle ;
attribuer (1020) une nouvelle adresse de protocole Internet à un équipement d'utilisateur (UE) ou à un hôte en utilisant une ancienne adresse de protocole Internet ;
effectuer (1030) une relocalisation de passerelle après avoir attribué la nouvelle adresse de protocole Internet ;
mettre en place (1040) une phase intermédiaire ;
**caractérisé en ce que**, lors de la phase intermédiaire, l'ancienne adresse de protocole Internet et la nouvelle adresse de protocole Internet peuvent toutes deux être utilisées en parallèle et l'ancienne passerelle (S/PGW1, 1220) et la nouvelle passerelle (S/PGW2, 1220) peuvent être utilisées en parallèle ;
le moyen (1210) de commande central échangeant des messages de commande de couche de protocole Internet entre les passerelles à changer ; et
libération libérer (1050) des ressources dans l'ancienne passerelle.

10. Moyen (1210) de commande central selon la revendication 9, la ou les mémoires (1215) et le code de programme informatique étant également configurés pour amener, avec le ou les processeurs (1214), le moyen de commande central au moins à régler au moins un temporisateur pour une ancienne adresse de protocole Internet de l'équipement d'utilisateur (UE).

11. Moyen (1210) de commande central selon la revendication 10, la ou les mémoires (1215) et le code de programme informatique étant également configurés pour amener, avec le ou les processeurs (1214), le moyen de commande central au moins à régler un temporisateur pour une durée de vie préférée de l'ancienne adresse de protocole Internet de l'équipement d'utilisateur (UE).

12. Moyen (1210) de commande central selon la revendication 10, la ou les mémoires (1215) et le code de programme informatique étant également configurés pour amener, avec le ou les processeurs (1214), le moyen de commande central au moins à régler un temporisateur pour une durée de vie valide de l'ancienne adresse de protocole Internet de l'équipement d'utilisateur.

13. Moyen (1210) de commande central selon la revendication 9, la ou les mémoires (1215) et le code de programme informatique étant également configurés pour amener, avec le ou les processeurs (1214), le moyen de commande central au moins à attribuer la nouvelle adresse de protocole Internet en utilisant une affectation d'adresse/de préfixe avec état.

14. Moyen (1210) de commande central selon la revendication 13, la ou les mémoires (1215) et le code de programme informatique étant également configurés pour amener, avec le ou les processeurs (1214), le moyen de commande central au moins à rejeter une demande de rafraîchissement d'équipement d'utilisateur pour une ancienne adresse de protocole Internet de l'équipement d'utilisateur (UE).

15. Moyen (1210) de commande central selon la revendication 9, la ou les mémoires (1215) et le code de programme informatique étant également configurés pour amener, avec le ou les processeurs (1214), le moyen de commande central au moins à attribuer la nouvelle adresse de protocole Internet en utilisant une configuration d'adresse sans état.
